Europäisches Patentamt

**European Patent Office**

**Office européen des brevets**

(11) Publication number: **0 142 238**

**A1**

# EUROPEAN PATENT APPLICATION

(21) Application number: **84306152.4**

(22) Date of filing: **07.09.84**

(51) Int. Cl.⁴: **G 11 B 23/50**

(30) Priority: **09.09.83 US 530658**
**07.05.84 US 607681**

(43) Date of publication of application:
**22.05.85 Bulletin 85/21**

(84) Designated Contracting States:
**BE CH DE FR GB IT LI LU NL SE**

(71) Applicant: **DOWTY RFL INDUSTRIES INC**
**Powerville Road**
**Boonton New Jersey 07005(US)**

(72) Inventor: **Seely, Earle S.**
**181 Oak Road**
**Boonton New Jersey(US)**

(72) Inventor: **Lavalley, Roger O.**
**312 Brooklyn Mt. Road**
**Hopatcong New Jersey(US)**

(74) Representative: **Abbott, Leonard Charles et al,**
**GILL JENNINGS & EVERY 53-64 Chancery Lane**
**London WC2A 1HN(GB)**

(54) **Apparatus and method for degaussing magnetic storage media.**

(57) In accordance with one form of the invention, a magnetic storage medium (e.g. disc pack 250) to be degaussed is placed in a coil (200) having a central open region sufficiently large to receive the entire magnetic storage medium. The coil is energized to obtain a current therein in one direction to produce a first magnetic field of a first polarity in the region. The coil is then energized to obtain a current therein in the opposite direction to produce in the region a second magnetic field of opposite polarity. The minimum strength of the magnetic fields should be at least 500 oersetds, and preferably about 1500 oersteds. In another form of the invention, a reel of magnetic tape (350) is simultaneously rotated on its axis and subjected to an applied transverse magnetic field, substantially in the plane of the reel, the transverse magnetic field being obtained using a lateral coil (140) which passes over and under the reel and covers about half the reel. The transverse magnetic field is applied first in one direction and then in the opposite direction. An axial magnetic field, substantially parallel to the axis of the reel, is then applied, first in one direction and then in the opposite direction, the axial magnetic field being obtained using a ring-shaped coil (150) surrounding the periphery of the reel. In the preferred embodiment, the step of applying an axial magnetic field includes applying axial magnetic fields in alternating directions at successively decreasing amplitudes.

./...

FIG. 3

## APPARATUS AND METHOD FOR DEGAUSSING
## MAGNETIC STORAGE MEDIA

This invention relates to improvements in techniques for erasing information stored on magnetic storage media.

There are many applications in which it is necessary to erase information on a magnetic storage medium, such as magnetic discs, magnetic drums, magnetic tapes, or the like. It is known, for example, that magnetic tape or tracks on a magnetic disc, can be erased or "degaussed" by applying magnetic fields of opposite polarity across the tape or across magnetic disc tracks. In some applications, such as where the information to be erased is unclassified data, voice, music, etc., the thoroughness of the erasing technique may not be particularly important. On the other hand, for applications wherein the information to be erased is classified data, it is very important that the data be completely erased. However, there has generally been a problem in the prior art in attaining reliable and complete erasure of information from magnetic storage media. The thoroughness or erasure, including remove of noise, is also important in applications where information having a high signal-to-noise ratio, for example a high quality video signal, is to be subsequently recorded on the magnetic storage medium.

The configuration of the particular magnetic storage medium to be erased is an important factor in determining whether or not a prior art technique is suitable for achieving sufficient or complete erasing of information. For example, in some prior art systems it is necessary to have erasing heads or coils in close proximity to strips or tracks of magnetic media which may not be readily accessible, due to such factors as the sealing of the magnetic medium in an enclosure or the shape or packaging configuration of the magnetic medium as compared to the design of a particular erasing apparatus.

A further factor that is significant is the time and effort needed to implement the erasing of magnetic media. Prior art techniques which erase a strip or track at a time are usually slow, and may require periodic operator intervention or monitoring.

One application which illustrates a number of the above-described factors is the need to quickly and reliably erase confidential data stored on sealed magnetic disc packs. Typically, such disc packs may include a number of stacked individual discs and head assemblies which cannot be conveniently disassembled or accessed and are highly susceptible to contamination, such as by dirt or dust, when opened or exposed to permanent magnets. It is well known that the high speed operation of this type of storage medium can be ruined by the presence of contaminants which interfere with precision movement as between the discs and heads. This factor, combined with the bulky configuration of the disc packs, renders the erasing task difficult. Indeed, the absence of an adequate erasing technique has resulted in the prior art practice of destroying disc packs and certain other disc storage media containing confidential data, rather than attempt to erase them and put them back in service. This is because the prospect of reusing a disc pack or other storage medium which may not be completely erased would give rise to the possibility of an unauthorized person recovering residual portions of the confidential data from the disc pack after it has been ostensibly erased and then either placed in storage or returned to an operating facility. . This is an unacceptable security risk. The same problem has also arisen with other types of sealed magnetic storage media.

Further, the efficient erasing of reels of magnetic tape, without the need for unwinding the reel to access the full length of tape, has not been sufficiently achieved in the prior art. The residual presence of noise on the tape, or portions thereof, depending on the type and manner of application of degaussing fields applied, has been a continuing problem.

It is an object of the present invention to provide solution to the problems of the prior art, as set forth.

According to one aspect of the present invention, apparatus for degaussing a magnetic storage medium to remove information stored therein, comprises a coil having a central open region sufficiently large to receive the entire magnetic storage medium; means energizing the coil to obtain a current therein in one direction to produce a first magnetic field of a first polarity in the said region, and subsequently energizing the coil to obtain a current therein in the opposite direction to produce in the said region a second magnetic field of opposite polarity.

The minimum strength of the magnetic fields is desirably at least 500 oersteds, and preferably about 1500 oersteds.

In the preferred embodiment of this form of the apparatus of the invention, the means for energizing the coil includes power supply means, capacitive storage means coupled to the power supply means, and means for successively coupling voltages from the capacitive storage means to the coil with opposite polarities.

A typical degaussing operation in accordance with this form of the invention takes about 30 seconds and requires no disassembly of the magnetic storage medium.

A further form of the present invention is directed to apparatus for degaussing a magnetic storage medium, such as a reel of magnetic tape.

Apparatus according to a second aspect of the present invention for degaussing a reel of magnetic tape, comprises means for rotating the magnetic tape reel on its axis; means for applying, during the said rotation, a transverse magnetic field substantially in the plane of the reel, the transverse magnetic field being applied first in one direction and then in the opposite direction; and means for applying an axial magnetic field substantially parallel to the axis of the reel, the axial magnetic field being applied first in one direction and then in the opposite direction.

In the preferred embodiment of this form of the invention, the step of applying an axial magnetic field comprises applying axial magnetic fields in alternating directions at successively decreasing amplitudes. In this embodiment, the transverse magnetic field preferably has a field strength of at least 1500 oersteds, and the initial axial magnetic field preferably has a field strength of at least 1500 oersteds. Further, the magnetic tape reel is rotated at a rate of at least 1000 revolutions per minute.

In an embodiment of the apparatus of this form of the invention, the transverse magnetic field is obtained using a lateral coil which passes over and under the reel and covers about half the reel. In this embodiment, the axial magnetic field is obtained using a ring-shaped coil surrounding the periphery of the reel.

The invention also consists in methods for degaussing magnetic storage media.

The applicant has found that the sequence and characteristics of the applied magnetic fields are important in obtaining a magnetic storage medium that is completely erased and leaves no significant amount of noise.

Further features and advantages of the invention will become more readily apparent from the following detailed description when taken in conjunction with the accompanying drawings, in which:-

Figure 1 is a block diagram of an apparatus in accordance with a form of the invention and which can be used to practice a form of the method of the invention.

Figure 2 is a diagram, partially in schematic form, of the coil in accordance with an embodiment of the first form of the invention, shown as containing a disc pack to be degaussed.

Figure 3 is an elevational perspective view, partially broken away, of another embodiment of an apparatus in accordance with the invention and which can be used to practice the method of the invention.

Figure 4 is a top view of the lateral coil and tape reel of the apparatus of Figure 3.

Figure 5 is a cross-sectional view, as taken through a section defined by 5-5 in Figure 4, of the apparatus of Figures 3 and 4.

Figure 6 is a block diagram showing the electronic sub-system of the apparatus of the invention, and which can be used to practice the method of the invention.

Figure 7 is a flow diagram of a routine for processing the processor of Figure 6 in accordance with an embodiment of the invention.

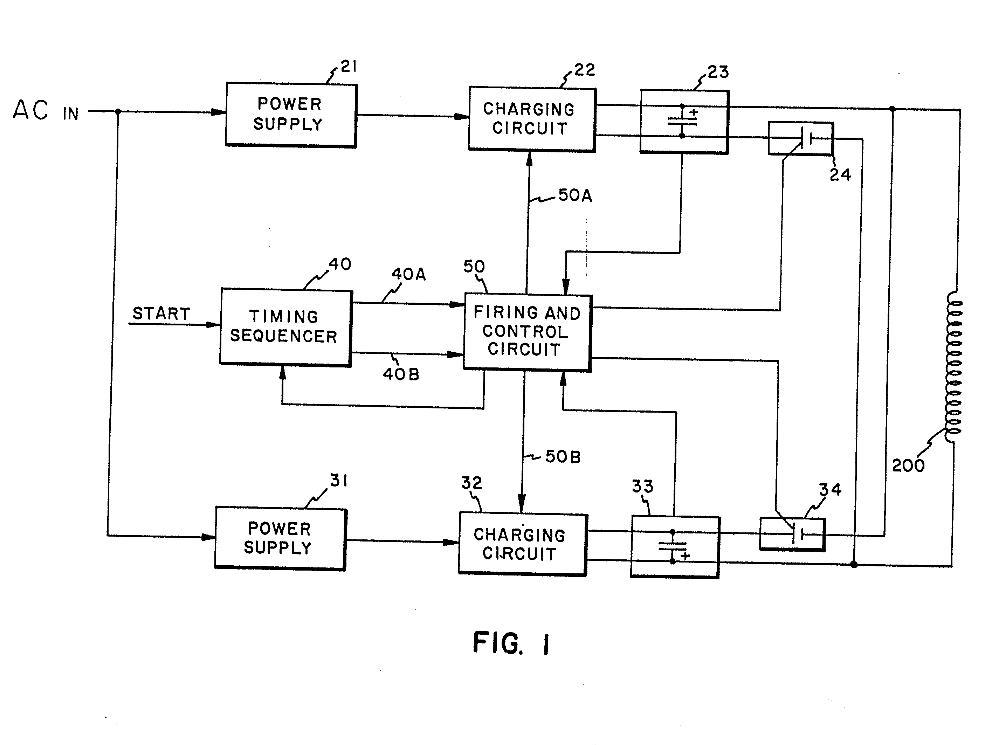

Referring to Figure 1, there is shown a block diagram of an apparatus in accordance with one embodiment of the invention, and which can be used to practice a form of the method of the invention. A source of AC power is coupled to power supplies 21 and 31, whose outputs are respectively coupled to charging circuits 22 and 32. The charging circuits 22 and 32 are enabled by outputs on lines 50A and 50B of firing and control circuit 50. The charging circuits 22 and 32 and the firing and control circuit 50 may be, for example, of the type available from RFL Industries, Inc. of New Jersey, their Model No.595. The outputs of charging circuits 22 and 32 are respectively coupled to capacitor banks 23 and 33. The output of capacitor bank 23 is coupled to coil 200 via an ignitron 24. The output of capacitor bank 33 is also coupled to the coil 200, but with opposite polarity, via ignitron 34.

A timing sequencer 40 is provided, and may comprise standard 555 timing chips. The sequencer 40 has output lines 40A and 40B which are coupled to firing and control circuit 50 and are operative to respectively enable the charging circuits 22 and 32 to initiate charging of the capacitor banks 23 and 33. Upon a start indication from an operator, the timing sequencer operates to generate enabling outputs, in timed sequence, on the lines 40A and 40B.

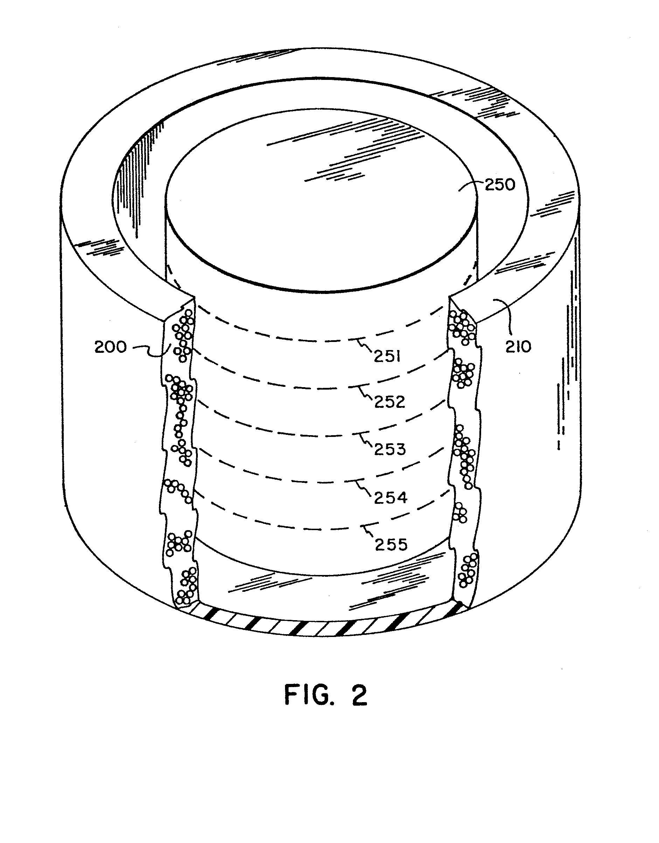

Referrning to Figure 2, there is shown the coil 200 of the Figure 1 embodiment. The coil is enclosed in a glass epoxy cylindrical form 210. The central region is proportioned sufficiently large to receive the entire magnetic storage medium to be degaussed. In the illustration of Figure 2, a disc pack 250, containing, in this example, five discs 251-255, is shown as being disposed inside the coil 200.

In operation of the present embodiment, after a start signal input from an operator, the signal on line 40A causes the firing and control circuit 50 to issue an enable signal to charging circuit 22 which, in turn, starts charging capacitor bank 23. The voltage at which the capacitor bank is to be discharged through the coil 200 was previously set by the operator. When this voltage is reached, the firing and control circuit fires the ignitron 24, and the resultant current through coil 200 causes a strong magnetic field in the coil, the field being, for example, in the upward direction through the centre of the coil shown in Figure 2. After firing, the ignitron is disabled, and a signal from firing and control circuit 50 enables the timer to proceed.

During the next part of the cycle, as initiated by the timing signal on line 40B, the charging circuit 32 charges capacitor bank 33, which is similarly discharged upon the firing by ignitron 34, and results in current of opposite direction through coil 200. In this case, current flow through the coil in the opposite direction causes the magnetic field in coil 200 to be, for example, in the downward direction through the centre of coil 200.

In an operating example of the present embodiment, the coil 200 comprised 120 turns of No.10 copper wire, and had an inner diameter of about 17 inches and an axial height of about 6 inches. The capacitor banks in this example each had a total capacitance of 18,600 microfarads, and were charged to a charging voltage of about 600 volts. This resulted in a minimum magnetic field in the coil central open region of about 1500 oersteds. In the example set forth, each operating half-cycle required 15 seconds, so that full operation required about 30 seconds. For degaussing of the illustrated disc pack, the magnetic fields are perpendicular to the planes of the discs, but for other magnetic media, such as a tape reel placed within the coil, the degaussing magnetic fields will be transverse the tape in opposite directions, and perpendicular to the longitudinal direction of the tape. Successful degaussing was achieved for this and other magnetic media, although this form of the invention is particularly advantageous for use in degaussing sealed magnetic media such as disc packs or sealed individual discs.

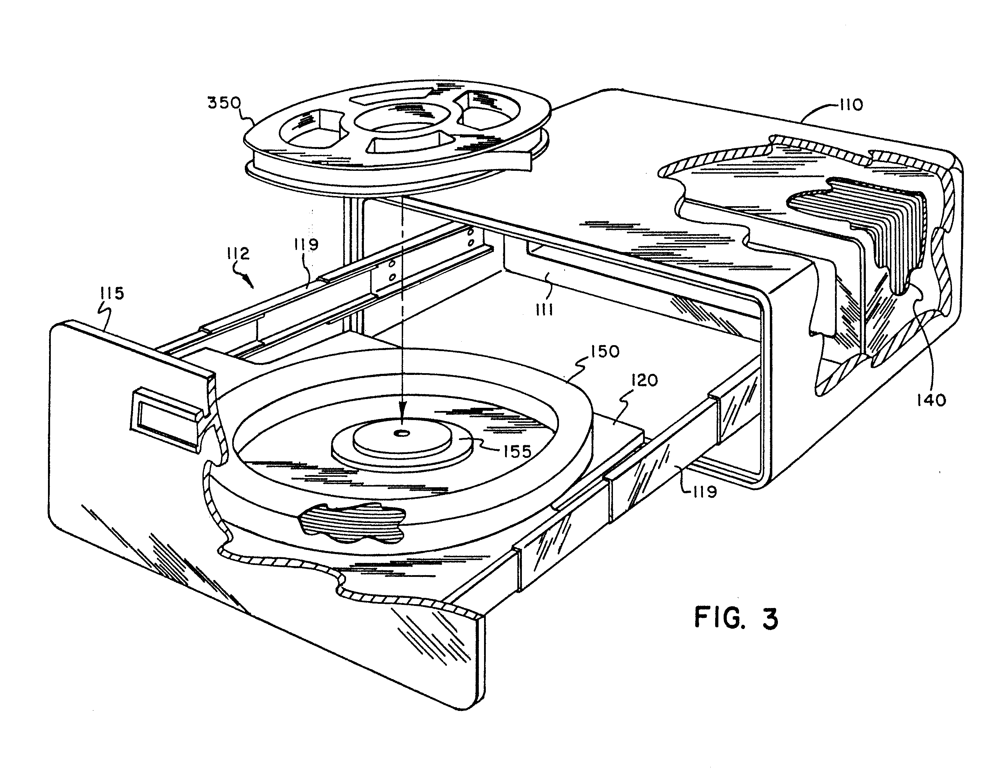

Referring to Figures 3, 4 and 5, there is shown an apparatus in accordance with a further embodiment of the invention, and which can be used to practive another form of the method of the invention. A housing 110 is provided, and contains a slideable drawer 112 which includes a slideable bse 120 and a front panel 115. The base 120 is slideable on rails 119 so that the drawer can be opened, for loading or unloading of a tape reel 350, and closed for the degaussing operation. Suitable interlocks (not shown) can be provided so that opening of the drawer 112 is prevented during the degaussing operation. In Figure 1, the drawer 112 is shown opened, and in Figure 3 the drawer is shown closed. Mounted generally centrally in the base 120 of drawer 112 is a motor 160 having a shaft which passes through an aperture in the base 120, and is coupled to a hub 155. When the motor is turned on, the hub can rotate at a high speed, for example, 2000 revolutions per minute, on bearings (not shown). Also mounted on the base 120 is a ring-shaped coil 150 which has an inner diameter that is somewhat larger than the outer diameter of the tape reel 350.

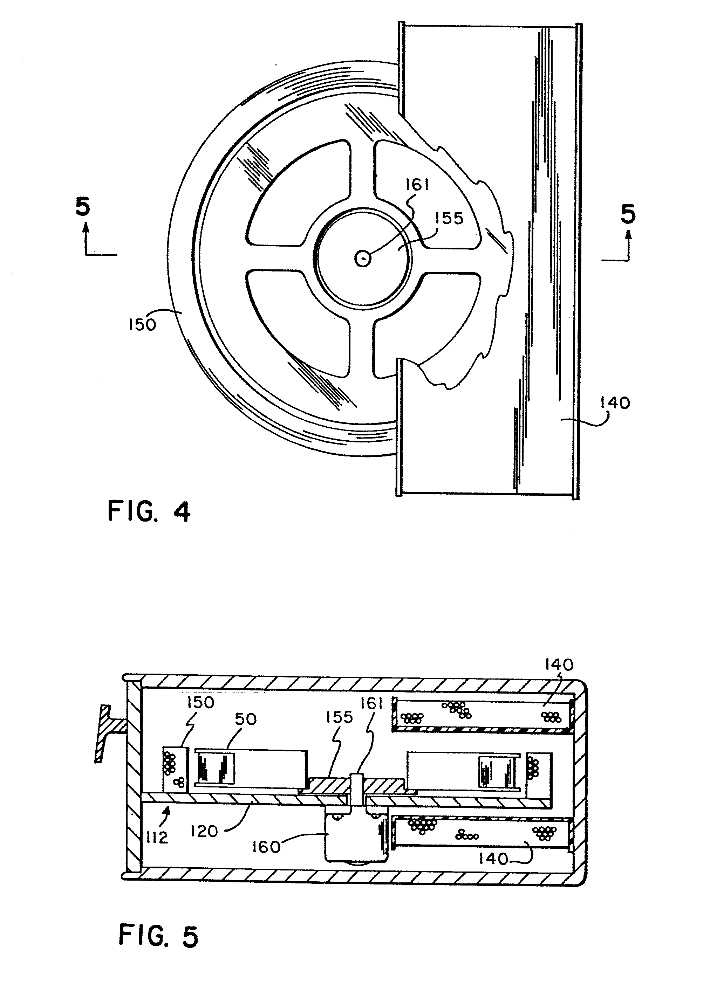

The housing 110 contains, in the rear half thereof, a lateral coil 140 which, as seen in Figures 4 and 5, has generally flat upper and lower surfaces which pass over and under the approximately half of the tape reel which is inserted furthest into the housing when the drawer 112 is closed. A separating frame 111 is provided adjacent the coil, and the rear portion of base 120 is configured to fit therethrough.

The housing and drawer may be formed, for example, of aluminium or other suitable non-magnetic materials, such as plastics.

After a reel of magnetic tape is inserted and the drawer is closed, operation can be implemented manually or automatically, as described hereinbelow. Briefly, a first step in the degaussing procedure involves simultaneously rotating the magnetic tape reel on its axis and applying a transverse magnetic field substantially in the plane of the reel, using the lateral coil 140, the magnetic field being applied first in one direction and then in the opposite direction. The transverse magnetic field includes a radial component through the tape surface that is beneficial in erasing components of information and noise on the tape. The magnetic field strength is preferably at least about 1500 oersteds. Since a field of this strength is difficult to sustain for a long duration, a high speed of rotation of the tape ensures that all of the tape will be subjected to a relatively high magnetic field strength. A rotational rate of at least 1000 revolutions per minute is preferred and , as noted above, 2000 revolutions per minute is the rate used in the present embodiment. This avoids residual noise which is found to occur if the field is applied non-uniformly. Next, an axial magnetic field is applied substantially parallel to the axis of the magnetic tape reel. The ring-shaped coil 150 provides a field having the desired component, axial magnetic field being applied first in one direction and then in the opposite direction. Preferably, the axial magnetic fields are applied in alternating directions at successively decreasing amplitudes. This degaussing of the magnetic tape, generally in the plane of the tape, in combination with the previously described degaussing through the tape, is found to result in a tape with very low noise levels. The initial axial magnetic field preferably has a field strength of at least 1500 oersteds. Decrements of about 20% of the previous field strength can be used for successive applications of the alternating axial magnetic field, until the field strength is about 20% of its initial amplitude.

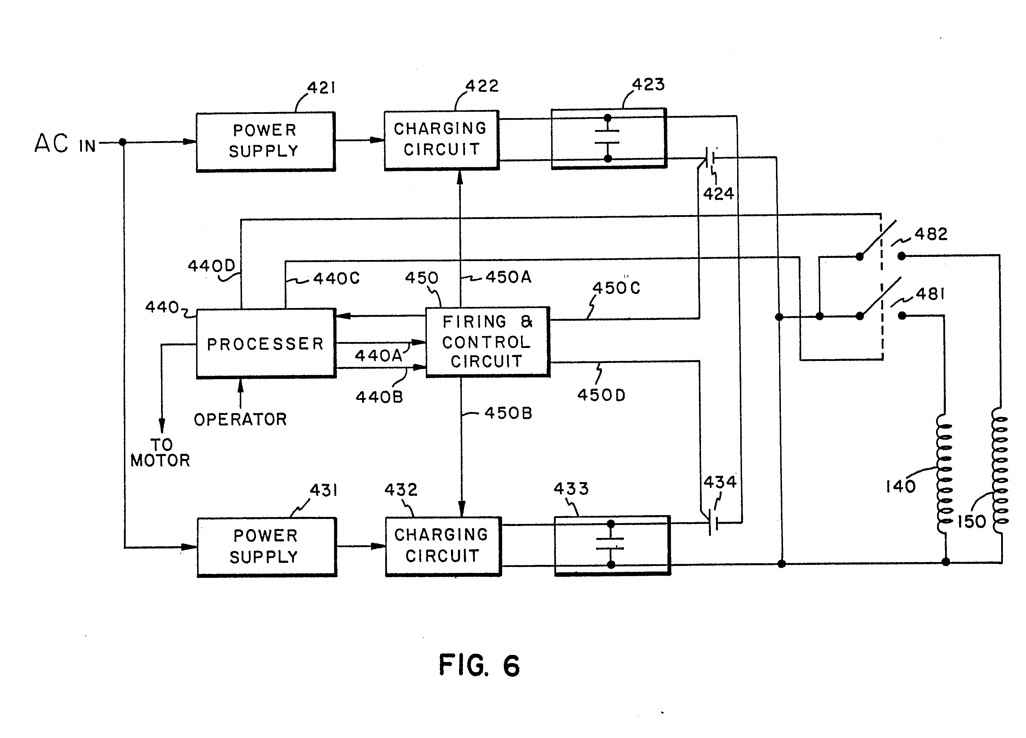

Figure 6 shows the electronic subsystem of an apparatus in accordance with an embodiment of the invention, and which can be used to practice the method of the invention. A source of AC power is coupled to power supplies 421 and 431, whose outputs are respectively coupled to charging circuits 422 and 432. The charging circuits 422 and 432 are enabled by outputs on lines 450A and 450B of firing and control circuit 450. The charging circuits 422 and 432 and the firing and control circuit 450 may be, for example, of the type available from RFL Industries, Inc. of New Jersey, such as their Model No.595. The outputs of charging circuits 422 and 432 are respectively coupled to capacitor banks 423 and 433. The output of capacitor bank 423 is coupled across coils 140 and 150, which are arranged in parallel, via an ignitron 424 and relays 481 and 482, respectively. The output of capacitor bank 433 is also coupled across coils 140 and 150, but with opposite polarity, via ignitron 434 and the relays 481 and 482, respectively.

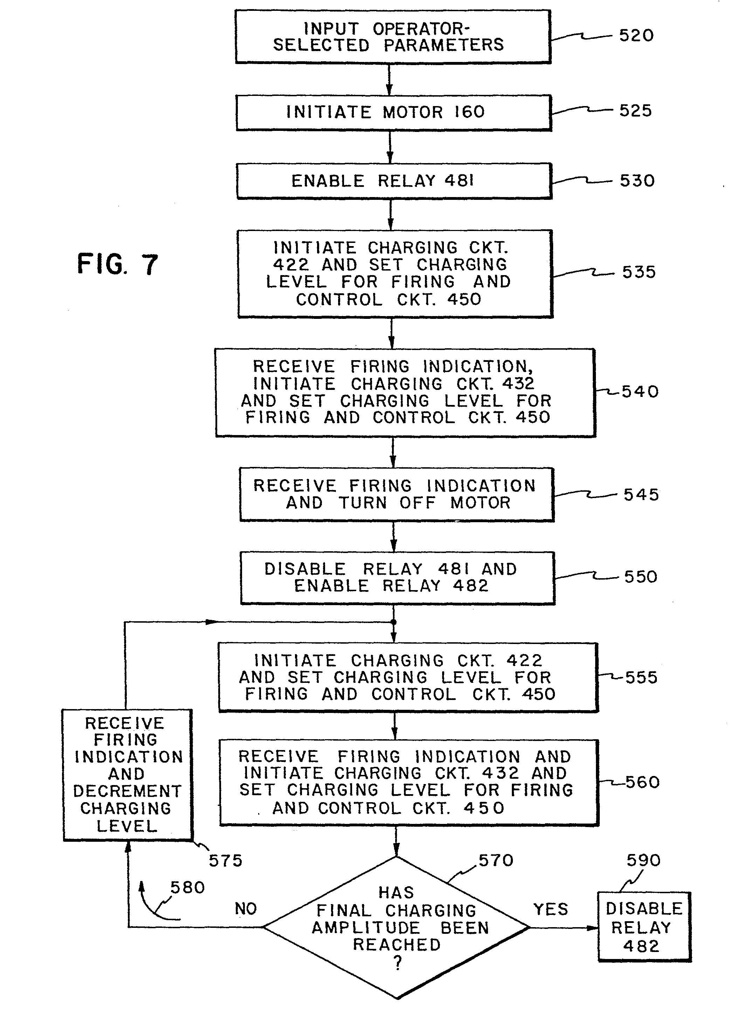

A processor 440 is provided, and implements, under operator command, the functions of coil selection, timing and sequencing. The processor 440 may comprise, for example, a microprocessor (such as a Modicon Model 84) programmed in accordance with the routine described in comjunction with Figure 7. The processor 440 has output lines designated 440A and 440B which are coupled to firing and control circuit 450 and are operative to respectively enable the charging circuits 422 and 432 to initiate charging of the capacitor banks 423 and 433, in a predetermined sequence. Outputs 450C and 450D of firing and control circuit 450 are used to fire ignitrons 424 and 434, respectively, when their associated capacitor banks reach predetermined voltages.

The outputs 440C and 440D of processor 440 respectively control the relays 481 and 482.

Referring to Figure 7, there is shown a routine of a flow diagram suitable for programming the processor 440 for automatic operation of the system in accordance with an embodiment hereof. The block 520 represents the inputting of operator-selected charging and timing parameters, such as from a keyboard or control panel (not shown). It will be understood, that these parameters will typically have default values, so that they do not have to be set for each operation, although the flexibility of setting them as desired for a given application can be provided. The block 525 represents the initiation of rotation of the magnetic tape reel, by energizing motor 160. A sufficient delay can then be provided to ensure that the motor reaches the desired rotational speed. The block 530 is then entered, this block representing the enabling of the relay 481, associated with lateral coil 140. The charging of circuit 422 is then initiated, and the charging level at which firing is to occur is sent to the firing and control circuit 450, as represented by the block 535. Firing of ignitron 424 is then awaited. Upon receipt of a firing indication for ignitron 424 (or, alternatively, after sufficient elapsed time), the charging circuit 432 is initiated and the charging level at which firing and control circuit 450 will implement firing is set, as represented by the block 540. Firing of ignitron 434 is then awaited. The block 545 is then entered, this block representing the receipt of a firing indication for ignitron 434 (or, again, the passage of sufficient elapsed time), whereupon the motor 160 can be turned off. Accordingly, as described so far, during rotation of the magnetic tape reel, the transverse magnetic field is applied, first in one direction and then the other, by reversing the polarity of the capacitive discharge through the lateral coil 140.

The block 550 is then entered, this block representing the disabling of relay 481, and the enabling of relay 482, associated with the ring-shaped coil 150. the charging circuit 422 is then initiated, and the charging level at which firing is to occur is set in the firing and control circuit 450 (block 555). Upon receipt of a firing indication (or suitable passage of time, as previously described), the charging circuit 432 is initiated and the firing level is set for the firing by firing and control circuit 450 (block 560). Inquiry is then made (diamond 570), as to whether or not a predetermined final minimum charging level has been reached. If not, when the next indication that firing has occurred is received, the charging level to be used during the next cycle is decremented (block 575), and the loop 580 continues until the charging level has been decremented down to the predetermined level. In this manner, the axial magnetic fields of alternating direction and decreasing amplitude are produced, as desired. Thereupon, the relay 482 is disabled, as represented by the block 590.

With the embodiments of the invention as described, magnetic storage media of various types, including sealed magnetic storage media, can be erased or degaussed reliably, quickly and conveniently.

The invention has been described with reference to particular preferred embodiments, but variations within the spirit and scope of the invention will occur to those skilled in the art. For example, it will be understood that configurations for energizing a coil in sequence and in opposite directions can take alternative forms. If desired, redundant elements could be "shared" in alternative circuit configurations with appropriate switching. For example, this would allow use of a single capacitor bank and associated circuitry in the Figure 1 embodiment.

## CLAIMS

1.    Apparatus for degaussing a magnetic storage medium to remove information stored therein, comprising:

a coil having a central open region sufficiently large to receive the entire magnetic storage medium;

means energizing the coil to obtain a current therein in one direction to produce a first magnetic field of a first polarity in the said region, and subsequently energizing the coil to obtain a current therein in the opposite direction to produce in the said region a second magnetic field of opposite polarity.

2.    Apparatus as defined by claim 1, wherein each of the said first and second magnetic fields has a minimum field strength in the said region of at least 500 oersteds.

3.    Apparatus as defined by claim 1, wherein each of the said first and second magnetic fields has a minimum field strength in the said region of about 1500 oersteds.

4.    Apparatus as defined by claim 1, 2 or 3, wherein the magnetic storage medium includes one or more magnetic discs.

5.    Apparatus as defined by claim 1, 2, 3 or 4, wherein the means for energizing the coil comprises power supply means, capacitive storage means coupled to the power supply means, and means for successively coupling voltages from the capacitive storage means to the coil with opposite polarities.

6.    A method for degaussing a magnetic storage medium to remove information stored therein, comprising the steps of:

disposing the magnetic storage medium in the central open region of a coil that is sufficiently large to receive the entire magnetic storage medium;

energizing the coil to obtain a current therein in one direction to produce a first magnetic field of a first polarity in the region; and

subsequently energizing the coil to obtain a current therein in the opposite direction to produce in the region a second magnetic field of opposite polarity.

7. Apparatus for degaussing a reel of magnetic tape comprising:

means for rotating the magnetic tape reel on its axis;

means for applying, during the said rotation, a transverse magnetic field substantially in the plane of the reel, the transverse magnetic field being applied first in one direction and then in the opposite direction; and

means for applying an axial magnetic field substantially parallel to the axis of the reel, the axial magnetic field being applied first in one direction and then in the opposite direction.

8. Apparatus as defined by claim 7, wherein the means for applying an axial magnetic field comprises means for applying axial magentic fields in alternating directions at successively decreasing amplitudes.

9. Apparatus as defined by claim 7 or 8 wherein the transverse magnetic field has a field strength of at least 1500 oersteds.

10. Apparatus as defined by claim 7 or 8, wherein the initial axial magnetic field has a field strength of at least 1500 oersteds.

11. Apparatus as defined by any one of claims 7 to 10, wherein the means for rotating the magnetic tape reel is operative to rotate the reel at a rate of at least 1000 revolutions per minute.

12. Apparatus as defined by any one of claims 7 to 11, wherein the means for applying the transverse magnetic field comprises a lateral coil which passes over and under the reel.

13. Apparatus as defined by any one of claims 7 to 12, wherein the means for applying an axial magnetic field comprises a ring-shaped coil surrounding the periphery of the reel.

14. A method for degaussing a magnetic storage medium of planar form, comprising the steps of:

a) simultaneously rotating the magnetic storage medium on an axis perpendicular to the plane of the magnetic storage medium and applying a transverse magnetic field substantially in the plane of the magnetic storage medium; the transverse magnetic field being applied first in one direction and then in the opposite direction; and

b) applying an axial magnetic field substantially parallel to the axis of the magnetic storage medium, the axial magnetic field being applied first in one direction and then in the opposite direction.

0142238

FIG. I

0142238

FIG. 2

350

110

112

119

115

111

150

120

155

119

140

FIG. 3

0142238

0142238

FIG. 4

FIG. 5

0142238

FIG. 6

0142238

FIG. 7

INPUT OPERATOR-SELECTED PARAMETERS — 520

INITIATE MOTOR 160 — 525

ENABLE RELAY 481 — 530

INITIATE CHARGING CKT. 422 AND SET CHARGING LEVEL FOR FIRING AND CONTROL CKT. 450 — 535

RECEIVE FIRING INDICATION, INITIATE CHARGING CKT. 432 AND SET CHARGING LEVEL FOR FIRING AND CONTROL CKT. 450 — 540

RECEIVE FIRING INDICATION AND TURN OFF MOTOR — 545

DISABLE RELAY 481 AND ENABLE RELAY 482 — 550

INITIATE CHARGING CKT. 422 AND SET CHARGING LEVEL FOR FIRING AND CONTROL CKT. 450 — 555

RECEIVE FIRING INDICATION AND INITIATE CHARGING CKT. 432 AND SET CHARGING LEVEL FOR FIRING AND CONTROL CKT. 450 — 560

RECEIVE FIRING INDICATION AND DECREMENT CHARGING LEVEL — 575

580

HAS FINAL CHARGING AMPLITUDE BEEN REACHED ? — 570

NO

YES

DISABLE RELAY 482 — 590

## DOCUMENTS CONSIDERED TO BE RELEVANT

EP 84306152.4

| Category | Citation of document with indication, where appropriate, of relevant passages | Relevant to claim | CLASSIFICATION OF THE APPLICATION (Int. Cl.4) |
|---|---|---|---|
| X | <u>FR - A - 1 441 742</u> (TOLANA)<br><br>* Fig. 1-3; claims 1,2 * | 1,5-7 | G 11 B 23/50 |
| A | E. PFAU "Tonbandtechnik", 1973<br><br>FISCHER TASCHENBUCHVERLAG, Frankfurt a. Main<br>pages 158, 159<br><br>* Page 159, lines 32-34 * | 1,6-8 | |
| A | C. KORISTKA "Grundlagen der magnetischen Signalspeicherung", vol. 1 , "Grundlagen und Magnetköpfe", 1968<br><br>AKADEMIE VERLAG, Berlin<br>pages 153, 154<br><br>* Abb. 41,42 * | 1,6-8 | |
| | | | **TECHNICAL FIELDS SEARCHED (Int. Cl.4)** |
| A | M. DICKREITER "Handbuch der Tonstudiotechnik", 4th edition, 1982<br><br>SAUR, München<br>pages 250, 251<br><br>* Page 251, lines 3-10 * | 1,6-8 | G 11 B<br><br>H 01 F |

The present search report has been drawn up for all claims

| Place of search | Date of completion of the search | Examiner |
|---|---|---|
| VIENNA | 13-12-1984 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82